# Europäisches Patentamt
## European Patent Office
## Office européen des brevets

(19)

(11) Veröffentlichungsnummer: **0 297 376**
**A2**

---

(12) # EUROPÄISCHE PATENTANMELDUNG

(21) Anmeldenummer: 88109766.1

(22) Anmeldetag: 20.06.88

(51) Int. Cl.⁴: **H01M 2/04 , H01M 2/06**

(30) Priorität: 03.07.87 DE 3722021

(43) Veröffentlichungstag der Anmeldung:
**04.01.89 Patentblatt 89/01**

(84) Benannte Vertragsstaaten:
**AT DE FR GB IT SE**

(71) Anmelder: **VARTA Batterie Aktiengesellschaft**
**Am Leineufer 51**
**D-3000 Hannover 21(DE)**

(72) Erfinder: **Falk, Klaus-Martin**
**Pappelstrasse 36**
**D-5800 Hagen 1(DE)**
Erfinder: **Schmidt, Hartmut, Dipl.-Ing.**
**Asternstrasse 24**
**D-5820 Gevelsberg(DE)**

(74) Vertreter: **Kaiser, Dieter Ralf, Dipl.-Ing.**
**Gundelhardtstrasse 72**
**D-6233 Kelkheim/Ts.(DE)**

---

(54) **Gehäusedeckel aus Kunststoff für Akkumulatoren.**

(57) Ein Akkumulatordeckel (1) aus Kunststoff, welcher in Zellengefäße einsteckbar ist, besitzt in den Durchgangsöffnungen (3) für die Zellenpole eine angespritzte Poldurchführung (4) und entlang seiner Außenkante eine angespritzte Ringdichtung (6), beide Anspritzungen aus einem im Vergleich zum Deckel-Werkstoff (PP) weichelastischen Material (Synthesekautschuk). Von den angeformten Dichtlippen (5, 7, 9) erzeugt die separate Dichtlippe (9) an der Ringdichtung beim Eindrücken des Deckels in das Zellengefäß eine Wanneneffekt, durch den übergelaufener Elektrolyt zurückgehalten wird, so daß keine Kriechströme entstehen.

Fig. 1

EP 0 297 376 A2

## Gehäusedeckel aus Kunststoff für Akkumulatoren

Die Erfindung betrifft einen Gehäusedeckel aus Kunststoff für Akkumulatoren, insbesondere für Bleiakkumulatoren, der eine Elektrolyteinfüllöffnung sowie Durchgangsöffnungen für die Zellenpole besitzt und durch Stecken in das Zellengefäß einsetzbar ist.

Bei Akkumulatoren mit Kunststoffgehäusen, wie sie beispielsweise als Starterbatterien in Kraftfahrzeugen in Gebrauch sind, sind Deckel und Behälter gewöhnlich miteinander verschweißt. Das damit gewonnene hohe Maß an Sicherheit gegen Elektrolytaustritt muß allerdings erkauft werden mit einem Verzicht auf Reparaturmöglichkeiten bei Betriebsstörungen der Zelle, da der Zugang zu ihrem Innern im wesentlichen auf den Einfüllstutzen beschränkt ist.

Aus der DE-OS 33 34 459 ist eine Akkumulatordeckel bekannt, welcher, an Umfang etwas geringer als die Gehäuseöffnung, mittels einer seinen Rand radial erweiternden Dichtung in das Gehäuse gesteckt wird. Dabei schieben sich die Pole durch die für sie vorgesehenen Durchgangsöffnungen hindurch, bis der Deckel sich auf Schultern der Polschäfte abstützt und in dieser Endposition durch in die Pole eingreifende Spannringe fixiert werden kann.

Derartige Poldurchführungen gewährleisten keine ausreichende Dichtigkeit. Durch ihre zwar lösbare, jedoch starre Verbindung mit dem Pol sind sie auch nicht geeignet, eine Vertikalbewegung insbesondere des positiven Pols aufzufangen, die von dem besonderen Korrosionsverhalten der positiven Elektrodenplatten und der damit einhergehenden Volumenvergrößerung ausgeht, was sich im Laufe der Akkumulatorlebensdauer als ein Längenwachstum des Poles auswirkt.

Gemäß EP-OS 82 826 wird ein entsprechender Ausgleich auf Kosten des Deckels geschaffen, der bei einem Akkumulatorgehäuse sowohl mit dem Zellenbehälter verschweißt als auch mit den Polen über kunststoffumspritzte Polbuchsen fest verbunden ist, im Einbauzustand jedoch eine konkave Formgebung aufweist, bei der sich elastische Spannungen, durch unterschiedliches Wachsen der Pole bedingt, gleichmäßig über die gesamte Deckelfläche verteilen, so daß eine Bruchgefahr abgewendet ist.

Dagegen läßt sich der DE-PS 27 57 568 eine Anordnung von Deckel und Bleipol entnehmen, welche ein axiales Verschieben des Poles gegen den Deckel gestattet und die Poldurchführung trotzdem dicht ist, indem der Polschaft eine angespritzte Kunststoffummantelung mit angeformten Dichtlippen besitzt, die mit dem zylindrischen Tubus der Durchgangsöffnung im Deckel in reibschlüssigem Kontakt stehen.

Der Erfindung liegt die Aufgabe zugrunde, eine auf eine gewisse Achsenbeweglichkeit des Poles Rücksicht nehmende, zugleich aber dichte, wartungsfreie und kostengünstige Polabdichtung für einen Deckel anzugeben, welcher in Zellengefäße eingesteckt werden kann.

Die Aufgabe wird erfindungsgemäß mit den im kenzeichnenden Teil des Anspruchs 1 angegebenen Mitteln gelöst.

Eine bevorzugte Ausführungsform des erfindungsgemäßen Deckels ist in zwei Figurendarstellungen wiedergegeben.

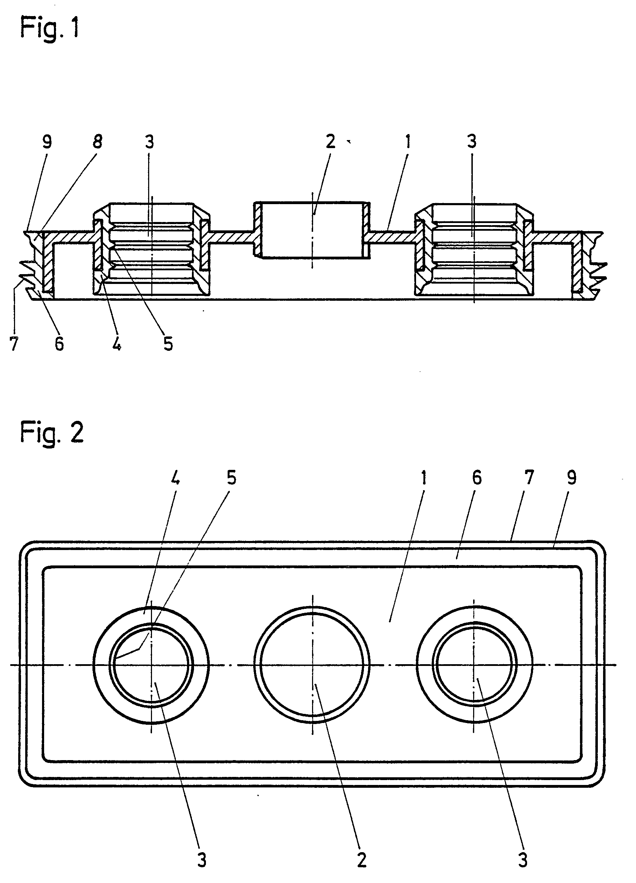

Figur 1 zeigt den Deckel im Längsschnitt.

Figur 2 zeigt den Deckel in einer Draufsicht.

In der Grundform 1 des Kunststoffdeckels gemäß den Figuren, die gewöhnlich ein einheitliches Spritzteil aus Polypropylen ist, sind eine Elektrolyt-Einfüllöffnung 2 sowie zwei Durchgangsöffnungen 3 für die Zellenpole vorgesehen.

Erfindungsgemäß ist der Innenwand einer jeden Durchführungsöffnung eine Poldurchführung 4 angespritzt, der vorzugsweise zur Abdichtung gegen den blanken Polschaft umlaufende Dichtlippen 5 angeformt sind. Das Material der Durchführung is in jedem Falle weicher als der beispielsweise aus Polypropylen bestehende Deckel-Werkstoff, jedoch ebenso wie dieser säurefest, temperaturfest und mit dem härteren Deckel-Kunststoff homogen verbunden. Besonders geeignet sind Synthesekautschuke aus der Gruppe der thermoplastischen Elastomere, zu denen u.a. das cis-1,4-Polyisopren, cis-1,4-Polybutadien, Styrol-Butadien-Kautschuk oder Silikonkautschuk zählen. Ein ebenfalls brauchbares thermoplastisches Kautschukmaterial besteht aus modifiziertem Polyolefin.

Als Steckdeckel, zum Abdichten gegen das Zellengehäuse, ist der Gegenstand der Erfindung außerdem in an sich bekannter Weise mit einem der Außenkante des Deckelrandes angespritzten Dichtring 6 versehen, dem ebenfalls Dichtlippen 7 angeformt sind. Der Dichtring ist aus dem gleichen weichelastischen Material wie demjenigen der Poldurchführungen gebildet und ebenso wie diese mit dem Grundwerkstoff des Deckels homogen verbunden.

Eine weitere, erfindungsgemäße Ausgestaltung des den Gehäusewänden einliegenden Steckdeckels sieht jedoch vor, daß der Dichtring 6 an seinem oberen Rande wulstartig verdickt ist, wobei diese Randverdickung 8 bündig mit der Deckel-Oberseite abschließt. Die Randverdickung gewährleistet aufgrund der hohen Formelastizität des Dichtungsmaterials einen elektrolytdichten Paßsitz des Deckels auch dann, wenn die Weite der Zellengefäße nicht der gewünschten Maßhaltigkeit entspricht.

Während die Randverdickung hier die notwendige Anpassung ermöglicht, erfüllt eine separate umlaufende Dichtlippe 9, welche der Randverdickung so angeformt ist, daß sie ihrerseits mit der Verdickung bündig abschließt bzw. mit der Randverdickung und der Deckel-Oberseite eine gemeinsame Ebene bildet, in sehr vorteilhafter Weise einen anderen wichtigen Zweck, nämlich Kriechströme zu verhindern.

Dies geschieht dadurch, daß die Dichtlippe sich beim Einstecken des Deckels in das Gefäß an dessen Wänden hochstellt und so im eingedrückten Zustand des Deckels einen Wanneneffekt erzeugt. Etwa beim Füllen übergeschwappter Elektrolyt wird von dieser Wanne aufgefangen und kann nicht überlaufen. Die Seitenwände des Zellgefäßes bleiben dadurch frei von netzender Flüssigkeit, die eine Fortleitung des Stromes ermöglichen könnte.

In einer zusätzlichen Ausgestaltung der Erfindung können dem Deckel (in den Figuren nicht wiedergegebene) Stellen mit verminderter Wandstärke, sogenannte Sollbruchstellen, angeformt sein. Diese können auch im Laufe des Betriebes gezielt durchstoßen werden und danach als Diagnoseöffnungen für die Einführung verschiedener Meßsonden (Thermometer, Dichtemesser) zur Kontrolle des Säurezustandes dienen. Dabei ist es günstig, die Diagnoseöffnungen so anzuordnen, daß sie sich jeweils über dem Rücken einer positiven Platte, der verhältnismäßig breit ist, befinden, damit es durch die Meßinstrumente nicht zu einer Beschädigung des Scheidermaterials kommt.

Ein großer fertigungstechnischer Vorteil des erfidungsgemäßen Deckels is darin zu sehen, daß sämtliche Anspritzungen simultan erfolgen können, d.h. aus einer gemeinsamen Spritzform hervorgehen. Man benötigt insgesamt zwei Spritzwerkzeuge, das erste zur Herstellung der Grundform 1 bzw. Deckeleinlage, das Zweite zum Anspritzen der weichelastischen Poldurchführungen 4 und der Ringdichtung 6 an die Grundform.

Durch die erfindungsgemäßen Maßnahmen wird die Verdeckelung eines Akkumulatorenbehälters wesentlich vereinfacht, weil der Deckel in seiner einstückigen Form auch alle notwendigen Abdichtungsfunktionen auf sich vereinigt, welche sonst nur unter Einsatz zusätzlicher Hilfsmittel erfüllt werden können, beispielsweise durch Schweißen und Vergießen von Dichtungsfugen oder durch das gleichzeitige Bearbeiten weiterer Bauteile, z.B. Polumspritzungen, um diese für die Verdeckelung zu präparieren.

## Ansprüche

1. Gehäusedeckel aus Kunststoff für Akkumulatoren, insbesondere für Bleiakkumulatoren, der eine Elektrolyteinfüllöffnung sowei Durchgangsöffnungen für die Zellenpole besitzt und durch Stecken in das Zellengefäß einsetzbar ist, wobei er den Seitenwänden des Gefäßes, abgeichtet gegen dieselben, einliegt, dadurch gekennzeichnet, daß in die Durchgangsöffnungen (3) Kunststoffdurchführungen (5) zur Abdichtung gegen die Pole aus einem im Vergleich zum Grundwerkstoff des Deckels weicheren, gummielastischen Kunststoffmaterial homogen angespritzt sind.

2. Gehäusedeckel nach Anspruch 1, dadurch gekennzeichnet, daß an die Außenkante des Deckelrandes ein umlaufender Dichtungsring (6) zur Abdichtung gegen das Zellengefäß aus einem im Vergleich zum Grundwerkstoff des Deckels weicheren, gummielastischen Kunststoffmaterial homogen angespritzt ist.

3. Gehäusedeckel nach Anspruch 1 und/oder 2, dadurch gekennzeichnet, daß an die Anspritzungen umlaufende Dichtlippen (5) angeformt sind.

4. Gehäusedeckel nach Anspruch 3, dadurch gekennzeichnet, daß der Dichtungsring (6) an seinem oberen Rand verdickt ist und daß an die Randverdickung (8) in bündigem Abschluß mit dieser und mit der Deckeloberseite eine separate Dichtlippe (9) angeformt ist.

5. Gehäusedeckel nach einem der Ansprüche 1 bis 4, dadurch gekennzeichnet, daß das Material der Anspritzungen (4, 6) ein in die Gruppe der thermoplastischen Elastomere fallender Synthesekautschuk ist.

6. Gehäusedeckel nach Anspruch 5, dadurch gekennzeichnet, daß der Synthesekautschuk ein modifiziertes Polyolefin ist.

Fig. 1

Fig. 2